(19) Europäisches Patentamt
European Patent Office
Office européen des brevets

(11) Veröffentlichungsnummer: **0 050 586**
**A1**

(12) **EUROPÄISCHE PATENTANMELDUNG**

(21) Anmeldenummer: **81810409.3**

(22) Anmeldetag: **12.10.81**

(51) Int. Cl.³: **D 06 P 5/00**, D 06 P 1/20, C 09 B 1/54, B 41 M 5/02, C 09 D 11/02

(30) Priorität: **17.10.80 CH 7772/80**

(43) Veröffentlichungstag der Anmeldung: **28.04.82 Patentblatt 82/17**

(84) Benannte Vertragsstaaten: **BE CH DE FR GB IT LI**

(71) Anmelder: **CIBA-GEIGY AG, Patentabteilung Postfach, CH-4002 Basel (CH)**

(72) Erfinder: **Möckli, Peter, Dr., Sennheimerstrasse 11, CH-4054 Basel (CH)**

(54) **Umdruckträger.**

(57) Die Erfindung betrifft Transferdruckträger, die ein bei 180 bis 210° C flüchtiges Muster tragen sowie ein Verfahren zum Bedrucken von flächenförmigen Gebilden aus Kunstfasern nach dem Transferdruckprinzip mittels solcher Transferdruckträger. Die erfindungsgemäßen Transferdruckträger enthalten als Rotelement eine sulfonsäuregruppen- und carboxylgruppenfreie 1-Amino-4-hydroxy- oder 4-aminoanthrachinon-Verbindung, die in 2-Stellung des Anthrachinonkernes eine mindestens ein und vorzugsweise mindestens 3 Fluoratome aufweisende Alkoxygruppe trägt.

EP 0 050 586 A1

0050586

1-13104

## Umdruckträger

Die vorliegende Erfindung betrifft neue Umdruckträger (auch Transferdruckträger genannt), vor allem solche aus Papier, die beim trockenen Transferdruck von Kunstfasern, insb. von Polyester- und Polyamidfasern als Hilfsträger dienen.

Die für Polyesterfaser sehr verbreitete Transfer-Drucktechnik, wonach Polyesterfasermaterialien trocken bei 200° bis 210° C in Kontakt mit einem das zu transferierende Muster tragenden Träger, z.B. nach dem im französichen Patent 1 585 119 beschriebenen Verfahren, bedruckt werden, hat sich ebenfalls zum Bedrucken dicht gepackter Materialien wie Polyamidteppiche bewährt. Dabei werden Transferdruckträger verwendet, deren zu übertragende Muster sog. "penetrierende" Farbstoffe aufweisen. Solche Transferdruckträger sind z.B. in der amerikanischen Patentschrift 4 088 442 und der entsprechenden französischen Patentschrift beschrieben, die unter der Nr. 2 262 601 veröffentlicht wurde. Die mit den bekannten,penetrierende Farbstoffe tragenden Transferdruckträgern erhaltenen Drucke sind im Rotgebiet sowohl in bezug auf Nuance wie auch betreffend deren Lichtechtheit nicht befriedigend.

Diese Mängel der bekannten Technik werden durch die neuen Umdruckträger der vorliegenden Erfindung behoben.

Die neuen Umdruckträger sind dadurch gekennzeichnet, dass sie auf einer flexiblen, hitzestabilen Unterlage, z.B. auf einer Papierbahn, ein bei 180° bis 210°C flüchtiges, d.h. sublimierbares oder verdampfbares Muster tragen, das als Rotelement eine sulfonsäure- und carboxylgruppenfreie 1-Amino-4-hydroxy- bzw. -4-aminoanthrachinonverbindung enthält, die in 2-Stellung eine fluorierte Alkoxygruppe trägt. Besonders wertvoll sind die Umdruckträger dieser Art, welche einen Farbstoff der Formel

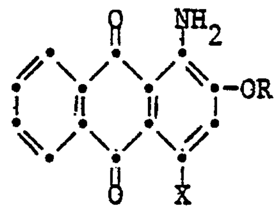

tragen, worin X eine freie Amino- oder vorzugsweise Hydroxylgruppe und R eine niedrigmolekulare, mindestens ein und vorzugsweise mindestens drei Fluoratome aufweisende Alkylgruppe bedeuten.

Die Erfindung betrifft ebenfalls ein Verfahren zum Bedrucken von flächenförmigen Gebilden aus synthetischen oder teilsynthetischen polymeren Materialien nach dem Transferdruckprinzip, welches dadurch gekennzeichnet ist, dass man Transferdruckträger verwendet, die ein bei 180° bis 210°C flüchtiges Muster tragen, dessen Rotelement eine 1-Amino-4-hydroxy- oder 4-aminoanthrachinonverbindung der oben genannten Art darstellt.

Ein weiterer Gegenstand der Erfindung sind Drucktinten bzw. Druckpasten für den Transferdruck und die Substrate, insbesondere Polyester- und Polyamidgewebe, -gewirke oder -samt sowie mehr oder weniger hochpoliger Plüsch und hochschäftige Tapeten und vor allem Teppiche aus Polyamid- oder aus Polyestermaterialien, die mit derartigen Transferdruckträgern bedruckt worden sind, d.h. dass sie ein Rotelement der angegebenen Art aufweisen.

Das Transferdruckverfahren ist im allgemeinen bekannt (vgl. z.B. Colour Index, 3. Ausgabe, Bd. 2, Seite 2480) und beispielsweise detailliert in den Französischen Patentschriften 1 223 330, 1 334 829

und 1 585 119 beschrieben. Dabei werden sogenannte Hilfsträger (Umdruckträger), die mit geeigneten Drucktinten bedruckt sind, in einen engen Kontakt mit dem zu bedruckenden Substrat gebracht, worauf unter Wärme- und gegebenenfalls Druckeinwirkung der Farbstoff von dem Träger auf das Substrat transferiert wird. Transferierung unter vermindertem Druck z.B. bei 80 bis 110 mbar ist mit dem Umdruckträger der vorliegenden Erfindung nicht notwendig; auch dicht gepackte Materialien lassen sich bei Normaldruck mit ausgezeichneter Penetration der Farbstoffe insbesondere derjenigen bedrucken, worin X eine Hydroxylgruppe darstellt.

Als Hilfsträger kommen flächenförmige Gebilde, wie Papier, Cellophan, Baumwollgewebe, Leinengewebe, Metallfolien usw. in Betracht. Bevorzugt wird Papier.

Die Druckfarben können nach üblichen Druckverfahren verdruckt werden.

Die Zusammensetzung der Drucktinten richtet sich unter anderem nach der Art des Substrates, des Druckverfahrens und des Trägermaterials.

Besonders geeignete Druckverfahren zur Herstellung von bedruckten Papierhilfsträgern sind der Tiefdruck und der Rotationsfilmdruck.

Geeignete Substrate sind vorzugsweise flächenförmige Gebilde, wie Vliese, Filze, Pelze, Folien und vor allem Gewebe und Gewirke aus künstlichem Material, insb. aus Polyestern wie Polyäthylenterephthalat und aus Polyamiden wie Polyhexamethylenadipinsäureamid und Polyamiden aus $\varepsilon$-Caprolactam.

Die Herstellung der Ausgangsfarbstoffe ist an sich bekannt z.B. durch Alkylierung von 4-Aminoxanthopurin mit einem Dialkylsulfat, dessen Alkylreste mindestens ein und vorzugsweise mindestens drei

Fluoratome aufweisen.

Eine weitere Methode zur Herstellung der neuen Farbstoffe der vorliegenden Erfindung besteht in der Umätherung entsprechender 2-Phenoxyderivate. So kann man zu den erfindungsgemässen Farbstoffen der eingangs angegebenen Formel gelangen durch Umsetzung der 1-Amino-4-hydroxy-2-phenoxyanthrachinone und der 1,4-Diamino-2-phenoxyanthrachinone mit mindestens ein und vorzugsweise mindestens drei Fluoratome enthaltenden aliphatischen Alkoholen. Diese Umsetzung geschieht mit Vorteil in Gegenwart von Alkalien z.B. von Natrium-, Kalium- oder Lithiumhydroxyd oder von Kalziumhydroxyd.

Es ist ebenfalls möglich die erfindungsgemässen Farbstoffe aus den entsprechenden 2-Halogenanthrachinonen herzustellen, indem man 1-Amino-2-chlor (oder 2-brom)-4-amino- oder -4-hydroxyanthrachinon mit mindestens ein und vorzugsweise mindestens drei Fluoratome enthaltenden aliphatischen Alkoholen z.B. mit dem 2,2,2-Trifluoroäthanol-1 umsetzt. Diese Umsetzung von 2-Halogenanthrachinonderivaten mit fluorhaltigen Alkoholen geschieht vorteilhafterweise in Anwesenheit kleiner Mengen eines Phenols oder Naphthols, das die Reaktion katalysiert.

Die so erhaltenen Farbsotffe, deren Sublimierbarkeit, Eindringungsvermögen (Penetration) und Lichtechtheit bemerkenswert sind, stellen neue Produkte dar, die ebenfalls Gegenstand der vorliegenden Patentanmeldung sind.

Die neuen Farbstoffe sind mit den in der Transferdrucktechnik üblichen Farbstoffen hoher Penetration sehr gut verträglich, indem sie praktisch gleiche oder zumindest sehr ähnliche Transferkurven im Bereich 175° - 205°C aufweisen.

Die mit diesen Farbstoffen erhaltenen Hilfsträger ergeben auf Polyester- und Polyamidmaterialien nach der trockenen Transferdruckmethode echt rote Drucke von ausgezeichneter Lichtechtheit und Penetration. Sie können deshalb zum Bedrucken von Teppichen, insb. Polyamidteppichen mit einer Polhöhe von 0,9 bis mehreren Millimetern, durch Transfer in der Dampfphase verwendet werden.

Besonders auf Polyamidfaserstoffen ist die Lichtechtheit derartiger Drucke bedeutend besser als diejenige der mit bisher bekannten Hilfsträgern erhaltenen Transferdrucke.

In den nachfolgenden Beispielen bedeuten, falls nichts anderes angegeben ist, die Teile Gewichtsteile, die Prozente Gewichtsprozente, und die Temperaturen sind in Celsiusgraden aufgeführt.

Beispiel 1: 35 Teile 1-Amino-4-hydroxy-anthrachinon, das in 2-Stellung eine β,β,β-Trifluoräthoxygruppe trägt, werden mit 50 Teilen eines Dispergiermittels (Ligninsulfonat oder Kondensationsprodukt aus Naphthalinsulfonsäure und Formaldehyd) und 100 Volumteilen Wasser vermischt und in einer Kugelmühle durch 10stündiges Mahlen in eine fein verteilte Form übergeführt.

Die so erhaltene, ca. 30 % Rohfarbe enthaltende Dispersion wird mit 400 Teilen einer 10 %igen Johannisbrotkernmehlätherverdickung und 500 Volumteilen Wasser angeteigt.

Mit dieser Druckpaste wird ein Papier im Rotationsfilmdruck oder im Tiefdruckverfahren bedruckt. Verpresst man dieses Papier während 60 Sekunden bei 200°C mit einem 2mm hohen Polyamidteppich oder Vlies, so erhält man einen kräftigen roten Druck von ausgezeichneter Lichtechtheit und Penetration.

<u>Beispiel 2:</u> 50 Teile des 1-Amino-2-trifluoräthyloxy-4-hydroxyanthrachinon werden mit 5 bis 10 Teilen eines Emulgatorgemisches aus äthoxyliertem Nonylphenol (4 bis 12 Mol Aethylenoxyd) in Wasser angeteigt. Man setzt 50 Teile Aethylcellulose $N_4$ (Hercules Powder) zu, knetet zwei Stunden lang und mahlt anschliessend auf einer üblichen Mühle.

Das so erhaltene Farbstoffpulver gibt man unter Rühren in ein Gemisch aus

730 g Aethanol
50 g Aethylenglykol und
20 g Aethylcellulose N 22 (Hercules Powder).

Mit der so erhaltenen Druckfarbe kann man im Tiefdruck Papiere bedrucken. Von diesen bedruckten Papieren kann man im Transfer-Verfahren auf Nadelfilzteppiche aus Polyamid bei 205° und einer Kontaktzeit von 60 Sekunden echtrote Drucke von ausgezeichneter Lichtechtheit und Penetration erhalten.

Nach einem der vorhergehenden Beispielen kann man unter Verwendung der beiden Farbstoffe 1,4-Diisopropylaminoanthrachinon und 1-Amino-2-trifluoräthoxy-4-hydroxyanthrachinon Transferdruckträger herstellen, mit welchen auf Polyamidteppichen bei 205° lichtechtere Violettdrucke erhalten werden als durch Verwendung der vorbekannten mit 1-Amino-2-brom-4-hydroxanthrachinon bedruckten Umdruckträger.

Reine und lichtechte Orangedrucke erhält man durch Verwendung der nach einem der vorhergehenden Beispiele mittels einem Gemisch von 1-Amino-2-trifluoräthoxy-4-hydroxyanthrachinon mit dem Farbstoff der Formel

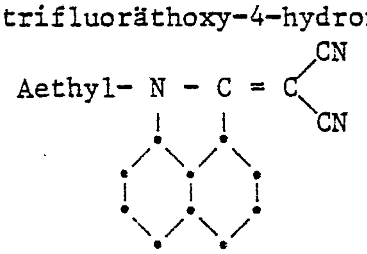

erhaltenen Umdruckträger.

Beispiel 3:

Herstellung von 1-Amino-2-(2',2',2'-trifluoräthoxy)-4-hydroxyanthrachinon

75 Volumteile 2,2,2-Trifluoräthanol und 5,4 Teile KOH werden 1 Stunde lang bei 125° miteinander verrührt. Nach Abkühlen auf Zimmertemperatur werden 22,5 Teile 1-Amino-2-phenoxy-4-hydroxyanthrachinon zugegeben und das Gemisch 14 Stunden bei 125° gerührt. Nach erneutem Abkühlen auf Raumtemperatur wird eine Lösung von 8,25 Teilen Natriumbicarbonat in 69 Volumteilen Wasser zu der Farbstoffsuspension zugegeben und 1/2 Stunde lang verrührt. Anschliessend wird abfiltriert und der Rückstand mit 80 Volumteilen Aethanol gewaschen. Der Presskuchen wird sodann in Wasser gut verrührt, abfiltriert und mit Wasser salzfrei gewaschen. Nach der Trocknung im Vakuumschrank bei 80° werden 22,1 Teile eines rotbraunen Pulvers vom Schmelzpunkt 266-268° erhalten.

Beispiel 4:

Herstellung von 1,4-Diamino-2-(2',2',2'-trifluoräthoxy)-anthrachinon

1,65 Teile 1,4-Diamino-2-chloranthrachinon und 0,45 Teil Kaliumhydroxyd werden in 30 Volumteile 2,2,2-Trifluoräthanol 20 Stunden lang auf 180°C erhitzt. Nach Abkühlen auf Raumtemperatur erhält man eine violette Suspension, die abfiltriert und mit wenig Trifluoräthanol gewaschen wird. Um die anorganischen Salze zu entfernen, wird der Rückstand in heissem Wasser verrührt, abfiltriert und mit heissem Wasser salzfrei gewaschen. Nach Trocknung bei 80°C im Vakuumschrank erhält man 1,75 Teile eines schwarzen kristallinen Pulvers vom Schmelzpunkt 180-182°C. Dieses Produkt enthält noch eine Spur des Ausgangmaterials, welches aber durch Umkristallisieren in Toluol leicht entfernt werden kann. Der Schmelzpunkt des reinen Produktes beträgt 189-191°C. Mit diesem Farbstoff lassen sich Synthesefasern wie Polyester, Polyamid oder Polyacrylnitril nach dem Transferdruckverfahren in einer sehr blaustichigen Rotnuance bedrucken.

Patentansprüche

1. Transferdruckträger, dadurch gekennzeichnet, dass sie ein bei 180° bis 210°C flüchtiges Muster tragen, das als Rotelement eine sulfonsäure- und carboxylgruppenfreie 1-Amino-4-hydroxy- oder -4-aminoanthrachinonverbindung enthält, die in 2-Stellung des Anthrachinonkernes eine fluorierte Alkoxygruppe trägt.

2. Transferdruckträger nach Patentanspruch 1, dadurch gekennzeichnet, dass sie einen Farbstoff der Formel

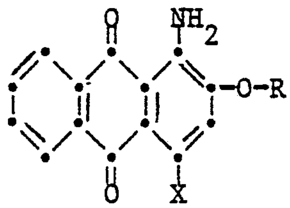

tragen, worin X eine freie Amino- oder vorzugsweise eine Hydroxylgruppe und R eine niedrigmolekulare mindestens ein und vorzugsweise mindestens drei Fluoratome aufweisende Alkylgruppe darstellen.

3. Transferdruckträger nach Patentanspruch 2, dadurch gekennzeichnet, dass R eine Trifluoräthylgruppe darstellt.

4. Verfahren zum Bedrucken von flächenförmigen Gebilden aus Polyamid- oder Polyester-Materialien nach dem Transferdruckprinzip, dadurch gekennzeichnet, dass man Transferdruckträger nach einem der vorhergehenden Patentansprüche verwendet.

5. Verfahren nach Patentanspruch 4, dadurch gekennzeichnet, dass man unter atmosphärischem Druck vorzugsweise bei 190° bis 210° und einer Kontaktzeit von mindestens 40 Sek. Polyam'iteppiche umdruckt.

6. Die nach dem Verfahren gemäss einem der Ansprüche 4 und 5 bedruckten Materialien.

7. Sulfonsäure- und carboxygruppenfreie 1-Amino-4-hydroxy- oder -4-aminoanthrachinone, die in 2-Stellung des Anthrachinonkernes eine mindestens ein und vorzugsweise mindestens drei Fluoratome aufweisende Alkoxygruppe tragen.

8. Anthrachinonfarbstoffe der Formel

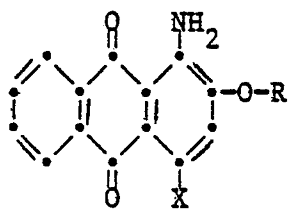

worin X eine freie Amino- oder Hydroxylgruppe und R eine niedrigmolekulare, mindestens ein und vorzugsweise mindestens drei Fluoratome aufweisende Alkylgruppe darstellen.

9. Farbstoffe gemäss Patentanspruch 8, dadurch gekennzeichnet, dass R eine Trifluoräthylgruppe bedeutet.

10. Verfahren zur Herstellung neuer Anthrachinonfarbstoffe, dadurch gekennzeichnet, dass man sulfonsäure- und carboxylgruppenfreie 1-Aminoanthrachinone, die in 4-Stellung eine freie Amino- oder Hydroxygruppe und in 2-Stellung ein Halogenatom oder eine Aryloxygruppe aufweisen, mit aliphatischen, mindestens ein und vorzugsweise mindestens drei Fluoratome enthaltenden Alkoholen umsetzt.

0050586

Europaisches Patentamt

**EUROPÄISCHER RECHERCHENBERICHT**

Nummer der Anmeldung
EP 81 81 0409

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | EP - A - 0 015 430 (BAYER)<br>* Ansprüche 1-3,7-10; Seite 2, Zeilen 6-11; Beispiele 21,22, 24 *<br>-- | 1-6 |
| | GB - A - 1 195 151 (THE YORKSHIRE CHEMICAL CO.)<br>* Ansprüche 1,4,10,11,14,15 *<br>-- | 7,8 |
| A | US - A - 2 466 008 (J.B. DICKEY)<br>* Insgesamt *<br>-- | 7 |
| A | US - A - 2 466 009 (J.B. DICKEY)<br>* Insgesamt *<br>-- | 7 |
| A | DE - C - 538 014 (I.G. FARBEN)<br>* Insgesamt *<br>-- | 7,8 |
| P | EP - A - 0 020 292 (SUBLISTATIC HOLDING)<br>* Insgesamt, insbesondere Seite 6, letzter Absatz - Seite 7, Zeile 2 *<br>-- | 1,4-6 |
| A | GB - A - 2 033 930 (BAYER)<br>* Insgesamt, insbesondere Seite 1, Zeile 43; Seite 2, Beispiel 10 *<br>---- | 1,4-6 |

KLASSIFIKATION DER ANMELDUNG (Int. Cl.)

D 06 P 5/00
1/20
C 09 B 1/54
B 41 M 5/02
C 09 D 11/02

RECHERCHIERTE SACHGEBIETE (Int. Cl.)

D 06 P 5/00
1/20
C 09 B 1/54
B 41 M 5/02
5/26
C 09 D 11/02

KATEGORIE DER GENANNTEN DOKUMENTE

X: von besonderer Bedeutung
A: technologischer Hintergrund
O: nichtschriftliche Offenbarung
P: Zwischenliteratur
T: der Erfindung zugrunde liegende Theorien oder Grundsatze
E: kollidierende Anmeldung
D: in der Anmeldung angefuhrtes Dokument
L: aus andern Grunden angeführtes Dokument
&: Mitglied der gleichen Patentfamilie, ubereinstimmendes Dokument

X Der vorliegende Recherchenbericht wurde fur alle Patentanspruche erstellt.

| Recherchenort | Abschlußdatum der Recherche | Prufer |
|---|---|---|
| Den Haag | 17-12-1981 | DEKEIREL |

EPA form 1503.1 06.78